# EUROPEAN PATENT APPLICATION

(11) **EP 4 648 400 A1**
(43) Date of publication of application: **12.11.2025**
(21) Application number: 24813784.6
(22) Date of filing: 05.03.2024
(51) Int. Cl.: H04N 7/14

(54) **CAMERA SHARING METHOD, ELECTRONIC DEVICE, AND SYSTEM**

(30) Priority: 30.05.2023 CN 202310631665
(71) Applicant: Honor Device Co., Ltd., Shenzhen, Guangdong 518040 (CN)
(72) Inventor: LI, Pengfei, Shenzhen, Guangdong 518040 (CN); ZHANG, Wei, Shenzhen, Guangdong 518040 (CN)
(74) Representative: Thun, Clemens
(86) International application number: PCT/CN2024/080120
(87) International publication number: WO 2024/244578

(57) **Abstract**

This application discloses a camera sharing method, an electronic device, and a system, and relates to the field of electronic technologies. The camera sharing method includes: A first electronic device detects that an identity-authenticated second electronic device goes online in a trusted ring; the first electronic device determines that the second electronic device supports camera sharing and that a camera sharing switch of the second electronic device is enabled, obtains a parameter of a virtual camera and installs a virtual camera driver, and adds the virtual camera to a camera list of the first electronic device, where the virtual camera refers to a camera of the second electronic device, and the virtual camera driver is configured to adapt to the parameter of the virtual camera; and the first electronic device displays the camera list, and in response to an operation of selecting the virtual camera from the camera list by a user, establishes an image transmission channel with the second electronic device, and displays, in real time, an image captured by the virtual camera.

## Description

This application claims priority to Chinese Patent Application No. 202310631665.1, filed with the China National Intellectual Property Administration on May 30, 2023 and entitled "CAMERA SHARING METHOD, ELECTRONIC DEVICE, AND SYSTEM", which is incorporated herein by reference in its entirety.

### TECHNICAL FIELD

This application relates to the field of electronic technologies, and in particular, to a camera sharing method, an electronic device, and a system.

### BACKGROUND

With rapid development of network self-media, in some live streaming scenarios, a user needs to display, by using one electronic device (for example, a personal computer (personal computer, PC)), an image captured by a camera of another electronic device (for example, a mobile phone). However, currently, before an image is captured by using a camera of another electronic device, a current electronic device needs to be manually configured before being used, which degrades user experience.

### SUMMARY

Embodiments of this application provide a camera sharing method, an electronic device, and a system, to implement automatic configuration of a shared camera.

To achieve the foregoing objective, the following technical solutions are used in embodiments of this application.

According to a first aspect, a camera sharing method is provided, including: A first electronic device detects that an identity-authenticated second electronic device goes online in a trusted ring, where the trusted ring refers to a networking form in which a plurality of identity-authenticated devices perform automatic discovery and automatic networking, and the first electronic device performs point-to-point direct communication with the second electronic device; the first electronic device determines that the second electronic device supports camera sharing and that a camera sharing switch of the second electronic device is enabled, obtains a parameter of a virtual camera and installs a virtual camera driver, and adds the virtual camera to a camera list of the first electronic device, where the virtual camera refers to a camera of the second electronic device, and the virtual camera driver is configured to adapt to the parameter of the virtual camera; the first electronic device displays the camera list; and in response to an operation of selecting the virtual camera from the camera list by a user, the first electronic device establishes an image transmission channel with the second electronic device, and displays, in real time, an image captured by the virtual camera.

According to the camera sharing method provided in this embodiment of this application, the first electronic device and the second electronic device perform automatic discovery and automatic networking based on the trusted ring, thereby saving a process of manually operating the two electronic devices to perform mutual authentication. When determining that the second electronic device can share the virtual camera, the first electronic device obtains the parameter of the virtual camera and installs the adapted virtual camera driver, to automatically adapt to the virtual camera. The first electronic device adds the virtual camera to the camera list of the first electronic device for selection by the user. When the user selects the virtual camera from the camera list, the first electronic device establishes the image transmission channel with the second electronic device, and displays the image captured by the virtual camera. Therefore, automatic configuration of the shared camera is implemented.

In a possible implementation, the method further includes: The first electronic device detects that the second electronic device goes offline in the trusted ring, or detecting an operation of uninstalling the virtual camera driver by the user, or detecting that communication with the second electronic device is abnormal; and the first electronic device uninstalls the virtual camera driver, and deletes the virtual camera from the camera list of the first electronic device. This implementation provides several scenarios in which the virtual camera driver is uninstalled.

In a possible implementation, the method further includes: If the virtual camera driver is occupied before the virtual camera driver is uninstalled, the first electronic device displays prompt information to prompt the user whether to uninstall the virtual camera driver; in response to an operation of determining, by the user, to uninstall the virtual camera driver, the first electronic device stops an image transmission service, and indicates the second electronic device to stop the image transmission service; and the first electronic device disconnects the image transmission channel, and stops displaying the image captured by the virtual camera. If the virtual camera is occupied, the virtual camera cannot be uninstalled, to avoid an image transmission error.

In a possible implementation, the method further includes: The first electronic device receives a pause message from the second electronic device, where the pause message is used to indicate that the user pauses sharing of the virtual camera; and the first electronic device receives, at a frame rate of maintaining the image transmission service, the image captured by the virtual camera, and displays, in a blurring manner, the image captured by the virtual camera. In this case, the image captured by the virtual camera is at a relatively low frame rate, and obvious lagging occurs if the image is still displayed with original sharpness. Therefore, blurring processing is performed on the image captured by the virtual camera, to make image lagging unobvious.

In a possible implementation, the method further includes: In response to an operation of stopping using the virtual camera by the user, or in response to receiving a stop message from the second electronic device, where the stop message is used to indicate that the user stops sharing the virtual camera, the first electronic device stops the image transmission service, and stops displaying the image captured by the virtual camera. This implementation provides several scenarios in which use of the virtual camera is stopped.

In a possible implementation, the method further includes: In response to an operation of installing the virtual camera driver by the user, the first electronic device determines whether a quantity of enabled second electronic devices is greater than or equal to a preset value; and if the quantity of enabled second electronic devices is less than the preset value, the first electronic device installs the virtual camera driver. This implementation is applied to a scenario in which the user manually installs the virtual camera driver.

According to a second aspect, an electronic device is provided, including a processor and a memory. The memory stores instructions, and when the processor executes the instructions, the electronic device performs the method according to the first aspect and any one of the implementations of the first aspect.

According to a third aspect, a camera sharing system is provided, including a first electronic device and a second electronic device. The first electronic device is the first electronic device according to the first aspect and any one of the implementations of the first aspect, the second electronic device includes a camera, and the first electronic device displays an image captured by the camera of the second electronic device.

According to a fourth aspect, a computer-readable storage medium is provided, including instructions. When the instructions are run on an electronic device, the electronic device is enabled to perform the method according to the first aspect and any one of the implementations of the first aspect.

According to a fifth aspect, a computer program product including instructions is provided. When the instructions are run on the foregoing electronic device, the electronic device is enabled to perform the method according to the first aspect and any one of the implementations of the first aspect.

According to a sixth aspect, a chip system is provided. The chip system includes a processor, configured to support an electronic device in implementing functions in the first aspect. In a possible design, the apparatus further includes an interface circuit. The interface circuit may be configured to receive a signal from another apparatus (such as a memory) or send a signal to another apparatus (such as a communication interface). The chip system may include a chip, or may include another discrete device.

For technical effects of the second aspect to the sixth aspect, refer to technical effects of the first aspect and any one of the implementations of the first aspect. Details are not described herein again.

### BRIEF DESCRIPTION OF DRAWINGS

FIG. 1 is a schematic diagram of a structure of a camera sharing system according to an embodiment of this application;
FIG. 2 is a schematic diagram of a structure of an electronic device according to an embodiment of this application;
FIG. 3A and FIG. 3B are schematic diagram of a software architecture in an electronic device according to an embodiment of this application;
FIG. 4 is a schematic flowchart of a first camera sharing method according to an embodiment of this application;
FIG. 5 is a schematic diagram of a first display interface of a first electronic device according to an embodiment of this application;
FIG. 6 is a schematic diagram of a second display interface of a first electronic device according to an embodiment of this application;
FIG. 7 is a schematic diagram of a third display interface of a first electronic device according to an embodiment of this application;
FIG. 8 is a schematic diagram of a fourth display interface of a first electronic device according to an embodiment of this application;
FIG. 9 is a schematic diagram of a fifth display interface of a first electronic device according to an embodiment of this application;
FIG. 10 is a schematic flowchart of a second camera sharing method according to an embodiment of this application;
FIG. 11 is a schematic flowchart of a third camera sharing method according to an embodiment of this application;
FIG. 12 is a schematic flowchart of a fourth camera sharing method according to an embodiment of this application;
FIG. 13 is a schematic flowchart of a fifth camera sharing method according to an embodiment of this application;
FIG. 14 is a schematic diagram of a sixth display interface of a first electronic device according to an embodiment of this application;
FIG. 15A to FIG. 15C are a schematic flowchart of a sixth camera sharing method according to an embodiment of this application;
FIG. 16 is a schematic diagram of a first display interface of a second electronic device according to an embodiment of this application;
FIG. 17 is a schematic diagram of a second display interface of a second electronic device according to an embodiment of this application;
FIG. 18 is a schematic diagram of a third display interface of a second electronic device according to an embodiment of this application;
FIG. 19 is a schematic diagram of a seventh display interface of a first electronic device according to an embodiment of this application;
FIG. 20 is a schematic diagram of a fourth display interface of a second electronic device according to an embodiment of this application;
FIG. 21 is a schematic flowchart of a seventh camera sharing method according to an embodiment of this application;
FIG. 22 is a schematic diagram of an eighth display interface of a first electronic device according to an embodiment of this application;
FIG. 23 is a schematic diagram of a fifth display interface of a second electronic device according to an embodiment of this application;
FIG. 24 is a schematic diagram of a ninth display interface of a first electronic device according to an embodiment of this application;
FIG. 25 is a schematic flowchart of an eighth camera sharing method according to an embodiment of this application; and
FIG. 26 is a schematic diagram of a structure of a chip system according to an embodiment of this application.

### DESCRIPTION OF EMBODIMENTS

First, some concepts in this application are described.

In the embodiments of this application, terms such as "first" and "second" are merely used for distinguishing features of the same type, and cannot be understood as an indication of relative importance, a quantity, or a sequence.

In the embodiments of this application, words such as "example" or "for example" are used to represent giving an example, an illustration, or a description. Any embodiment or design solution described as "example" or "for example" in this application should not be construed as being preferred or advantageous over other embodiments or design solutions. Exactly, the words such as "example" or "for example" are intended to present related concepts in a specific manner.

A trusted ring is a networking form in which a plurality of identity-authenticated devices perform automatic discovery and automatic networking, so that a plurality of devices across systems trust each other and are interconnected to each other with relatively low power consumption, and resources and services are shared between the plurality of devices. Identity authentication in the trusted ring usually means that a same account is logged in to a plurality of devices, and the plurality of devices perform point-to-point direct communication with each other through near field communication. This application is described by using an example in which the trusted ring is a MagicRing, but this is not intended to constitute a limitation, and another networking form with a similar function may be used.

With rapid development of network self-media, in some live streaming scenarios, a user needs to display, by using one electronic device (for example, a personal computer (personal computer, PC)), an image captured by a camera of another electronic device (for example, a mobile phone). For example, a painting live streamer performs live streaming by using a live streaming application running on the PC, and a process that is of painting by a hand and that is captured by using the camera of the mobile phone is displayed. For another example, a teaching live streamer performs live streaming by using an online class meeting application running on the PC, and an experimental close-up captured by using the camera of the mobile phone is displayed. However, currently, before an image is captured by using a camera of another electronic device, a current electronic device needs to be manually configured before being used, which degrades user experience.

According to the camera sharing method, the electronic device, and the system provided in the embodiments of this application, a first electronic device and a second electronic device perform automatic discovery and automatic networking based on a trusted ring, and the two electronic devices do not need to be manually operated to perform point-to-point connection and mutual authentication. In addition, in a condition that the second electronic device can share a virtual camera, the first electronic device obtains a parameter of the virtual camera and installs an adapted virtual camera driver, so that the virtual camera driver automatically adapts to the parameter of the virtual camera, to correctly parse and display an image captured by the virtual camera. When a user selects the virtual camera, the first electronic device can display the image captured by the virtual camera. Therefore, automatic configuration of the shared camera is implemented.

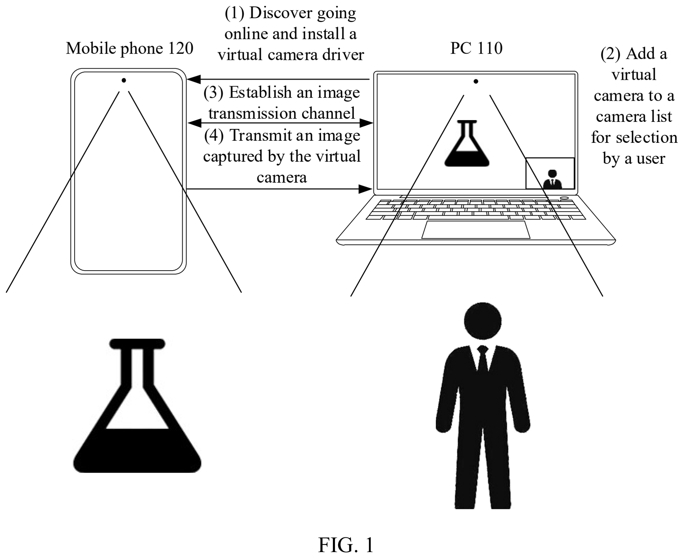

For the foregoing scenario, an embodiment of this application provides a camera sharing system. As shown in FIG. 1, the camera sharing system includes a first electronic device (a PC 110 shown in FIG. 1) and at least one second electronic device (a mobile phone 120 shown in FIG. 1).

Communication may be performed between the first electronic device and the second electronic device, for example, Internet communication and near field communication. The near field communication includes Bluetooth, wireless fidelity (wireless fidelity, WiFi), near field communication (near field communication, NFC), and the like. It should be noted that, compared with the Internet connection, the near field communication is more helpful to ensure information security because it is point-to-point direct communication. In addition, a transmission rate is not affected by a network factor, so that larger-bandwidth transmission can be implemented.

In some examples, a user account at a same system level, such as a same Honor^{®} account, may be logged in to the first electronic device and the second electronic device. It should be understood that, a plurality of electronic devices (for example, the first electronic device and the second electronic device) in to which a same user account is logged may joy a same trusted ring through identity authentication. Therefore, communication can be performed only in the trusted ring, to ensure device security. For example, the first electronic device and the second electronic device discover that each other goes online in the trusted ring, and the first electronic device and the second electronic device synchronize a capability of a virtual camera, transmit an invoking request, transmit an image to each other, and so on.

A target application (for example, a live streaming application or an online class meeting application) is installed in the first electronic device. In a process in which the first electronic device runs the target application, an image captured by a camera of the second electronic device may be further displayed. The camera of the second electronic device may be referred to as a virtual camera or a remote camera, which is referred to as a virtual camera in this application. In addition, there may be one or more virtual cameras, and a plurality of virtual cameras may belong to a same second electronic device or different second electronic devices.

The second electronic device includes a camera application that implements a remote photographing function and an image distribution function. The second electronic device may send, to the first electronic device, a function of supporting camera sharing by the second electronic device, so that the first electronic device discovers and invokes the virtual camera. The second electronic device may receive a request that is from the first electronic device and that is used for invoking the virtual camera, send, in real time, an image captured by the camera to the first electronic device, and display the image on the first electronic device.

As shown in FIG. 1, a basic working principle of the camera sharing system is as follows: (1) After discovering that the second electronic device goes online in the trusted ring, the first electronic device installs a virtual camera driver. The virtual camera driver may provide a driver for the virtual camera, and adapt to a parameter of the virtual camera. (2) After successfully installing the virtual camera driver, the first electronic device adds the virtual camera to a camera list for selection by a user. (3) After the user selects the virtual camera, the first electronic device establishes an image transmission channel with the second electronic device. (4) The second electronic device transmits, to the first electronic device by using the image transmission channel, an image captured by the virtual camera. It should be noted that, the user may stop or pause sharing of the virtual camera on the second electronic device side, or the user may stop using the virtual camera on the first electronic device side.

The first electronic device and the second electronic device are merely classified based on different function roles played by the electronic devices in a scenario of obtaining a picture. The first electronic device is a device requiring an image, and the second electronic device is a device providing an image. It should be understood that, a same electronic device serve as the first electronic device in some scenarios, and may serve as the second electronic device in some other scenarios. For example, if the mobile phone 120 or a tablet computer 130 in FIG. 1 obtains an image from another device, the mobile phone or the tablet computer is a device requiring an image, and may also serve as the first electronic device. If the notebook computer 110 in FIG. 1 has a capability of sharing a camera, the notebook computer may serve as a device providing an image, that is, serve as the second electronic device.

For example, the first electronic device and the second electronic device each may be a handheld device, a vehicle-mounted device, and the like, such as a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless device in industrial control (industrial control), a wireless device in self driving (self driving), a wireless device in a remote medical surgery (remote medical surgery), a wireless device in a smart grid (smart grid), a wireless device in transportation safety (transportation safety), a wireless device in a smart city (smart city), a wireless device in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a personal computer (personal computer, PC), a computing device or another processing device connected to a wireless modem, a vehicle-mounted device, a wearable device, a terminal device in a 5G network, a terminal device in a future evolved public land mobile network (public land mobile network, PLMN), and the like. This is not limited in the embodiments of this application.

The first electronic device and the second electronic device may alternatively be wearable devices, for example, smartwatches or smart glasses, and devices that focus only on a specific type of application and can be used together with other devices such as smartphones, such as various types of smart bands and smart jewelry that detect physical signs. In addition, the first electronic device and the second electronic device may alternatively be terminal devices in an Internet of Things (internet of things, IoT) system.

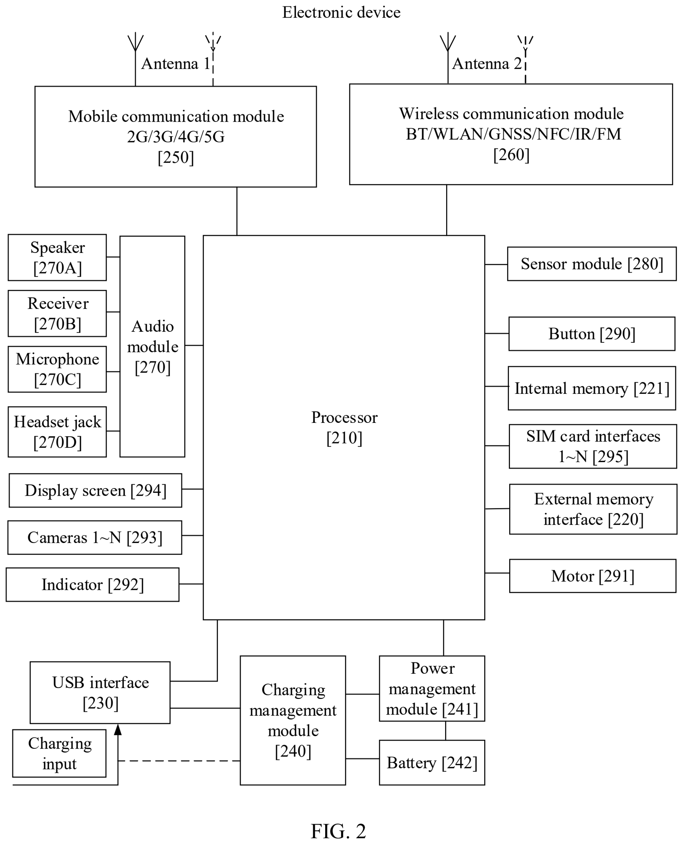

FIG. 2 is a diagram of a hardware structure of an electronic device (for example, the first electronic device or the second electronic device) according to an embodiment of this application. For example, the electronic device is a mobile phone, and may include: a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display screen 294, a subscriber identification module (subscriber identification module, SIM) card interface 295, and the like.

It may be understood that the structure shown in this embodiment does not specifically limit the electronic device. In some other embodiments, the electronic device may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include a field programmable gate array (field programmable gate array, FPGA), an application specific integrated circuit (application specific integrated circuit, ASIC), a system on chip (system on chip, SoC), a central processing unit (central processing unit, CPU), a network processor (network processor, NP), a micro controller unit (micro controller unit, MCU), a programmable logic device (programmable logic device, PLD), an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device. The controller may generate an operation control signal based on instruction operation code and a timing signal, to complete control of instruction fetching and instruction execution.

The charging management module 240 is configured to receive a charging input from a charger. The charger may be a wireless charger or a wired charger. The charging management module 240 may further supply power to the electronic device by using the power management module 241 while charging the battery 242.

The power management module 241 is configured to connect the battery 242 and the charging management module 240 to the processor 210. The power management module 241 receives an input from the battery 242 and/or the charging management module 240, to supply power to the processor 210, the internal memory 221, an external memory, the display screen 294, the camera 293, the wireless communication module 260, and the like. The power management module 241 may be further configured to detect parameters such as a battery capacity, a quantity of battery cycles, and a battery health state (electric leakage and impedance).

A wireless communication function of the electronic device may be implemented by using the antenna 1, the antenna 2, the mobile communication module 250, the wireless communication module 260, the modem processor, the baseband processor, and the like.

The electronic device implements a display function by using the GPU, the display screen 294, the application processor, and the like. The GPU is a microprocessor for image processing and connects the display screen 294 and the application processor. The GPU is configured to perform mathematical and geometric computing for graphics rendering. The processor 210 may include one or more GPUs that execute program instructions to generate or change displayed information.

The electronic device may implement a photographing function by using the ISP, the camera 293, the video codec, the GPU, the display screen 294, the application processor, and the like.

In some embodiments, when the electronic device serves as the second electronic device, the electronic device may invoke, based on a request of the first electronic device, the camera 293 to capture an image and return the image to the first electronic device.

The external memory interface 220 may be configured to connect to an external storage card, for example, a Micro SD card, to extend a storage capability of the electronic device. The external storage card communicates with the processor 210 through the external memory interface 220 to implement a data storage function, For example, files such as music and videos are stored in the external storage card.

The internal memory 221 may be configured to store computer-executable program code. The executable program code includes instructions. The processor 210 runs the instructions stored in the internal memory 221, to perform various function applications and data processing of the electronic device. The internal memory 221 may include a program storage area and a data storage area. The program storage area may store an operating system, an application required by at least one function (for example, a sound playing function or an image playing function), and the like. The data storage area may store data (for example, audio data and a phone book) and the like created during use of the electronic device. In addition, the internal memory 221 may include a high-speed random access memory, and may further include a nonvolatile memory, for example, at least one magnetic disk storage device, a flash memory device, or a universal flash storage (universal flash storage, UFS).

The memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. Through example descriptions but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories used for the system and the method described in this specification are intended to include, but are not limited to, these and any other proper types of memories.

The electronic device may implement an audio function by using the audio module 270, the speaker 270A, the receiver 270B, the microphone 270C, the headset jack 270D, the application processor, and the like, for example, implement music playback and recording.

The button 290 includes a power-on/off button, a volume button, and the like. The button 290 may be a mechanical button, or may be a touch button. The electronic device may receive a key input and generate a key signal input related to user settings and function control of the electronic device.

The motor 291 may generate a vibration prompt. The motor 291 may be configured to provide a vibration prompt for an incoming call, and may also be configured to provide vibration feedback for touch. For example, touch operations performed on different applications (for example, photographing and audio playing) may correspond to different vibration feedback effects. The motor 291 may correspond to different vibration feedback effects when touch operations are performed on different areas of the display screen 294. Different application scenarios (for example, a time prompt, information receiving, an alarm clock, and a game) may also correspond to different vibration feedback effects. A touch vibration feedback effect may be further customized.

The indicator 292 may be an indicator light, and may be configured to indicate a charging status, a power change, a message, a missed incoming call, a notification, and the like.

The SIM card interface 295 is configured to connect to a SIM card. The SIM card may be inserted into the SIM card interface 295 or removed from the SIM card interface 295 to implement contact with and separation from the electronic device. The electronic device may support one or N SIM card interfaces, where N is a positive integer greater than 1. The SIM card interface 295 may support a Nano SIM card, a Micro SIM card, a SIM card, or the like.

In the embodiments of this application, a software system of an electronic device (such as the first electronic device and the second electronic device) may use a layered architecture, an event-driven architecture, a microkernel architecture, a microservice architecture, or a cloud architecture. In this specification, an Android (Android)^{®} system with a layered architecture is used as an example to describe a software structure of the first electronic device and the second electronic device.

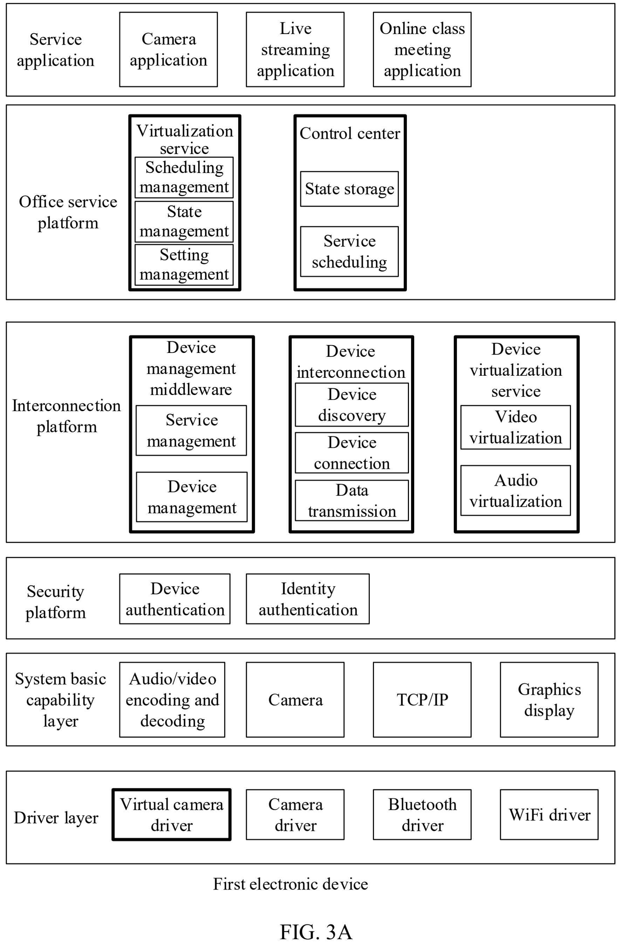

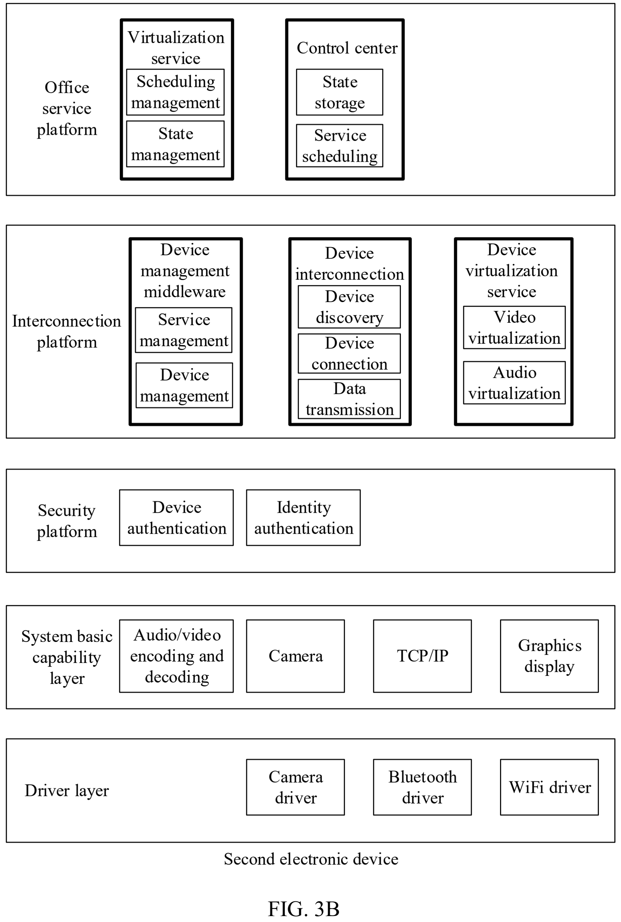

As shown in FIG. 3A and FIG. 3B, the first electronic device and the second electronic device each include a driver layer, a system basic capability layer, a security platform, an interconnection platform, and an office service platform. The first electronic device further includes service applications.

The driver layer includes a virtual camera driver (located in the first electronic device), a camera driver, a Bluetooth driver, and a WiFi driver. The system basic capability layer includes audio/video encoding and decoding, a camera, a TCP/IP, and graphics display. The security platform includes device authentication and identity authentication. The interconnection platform includes a device management middleware, device interconnection (such as a MagicLink), and a device virtualization service. The office service platform includes a virtualization service and a control center. The service applications include a camera application, a live streaming application, and an online class meeting application.

The virtualization service is configured to provide a virtualization interface for an upper-layer service application, to implement scheduling management, state management (for example, a virtual camera being in an enabled state or a disabled state), and setting management of a virtualized device.

The control center is configured to implement state storage and service scheduling of devices in a trusted ring.

The device management middleware is configured to provide service sharing for the devices in the trusted ring, to implement service management and device management.

The device interconnection (such as the MagicLink) is configured to implement a discovery function, channel connection function, and a data transmission function of each device in the trusted ring.

The device virtualization service is configured to provide a virtualization function for a video or audio.

The virtual camera driver is configured to provide a driver for a virtual camera, and adapt to a parameter of the virtual camera.

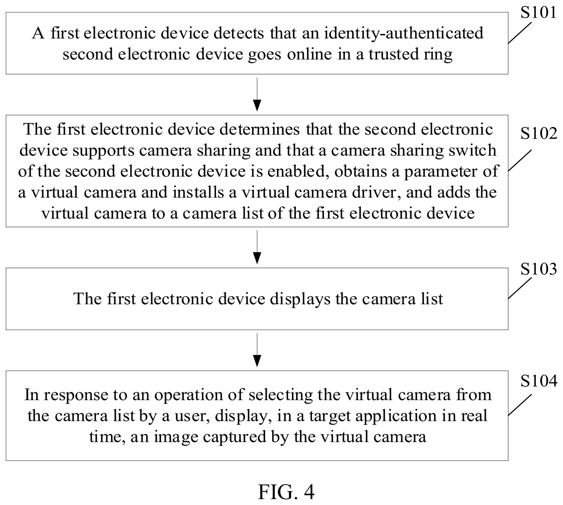

As shown in FIG. 4, a camera sharing method provided in an embodiment of this application includes the following steps.

S101: A first electronic device detects that an identity-authenticated second electronic device goes online in a trusted ring.

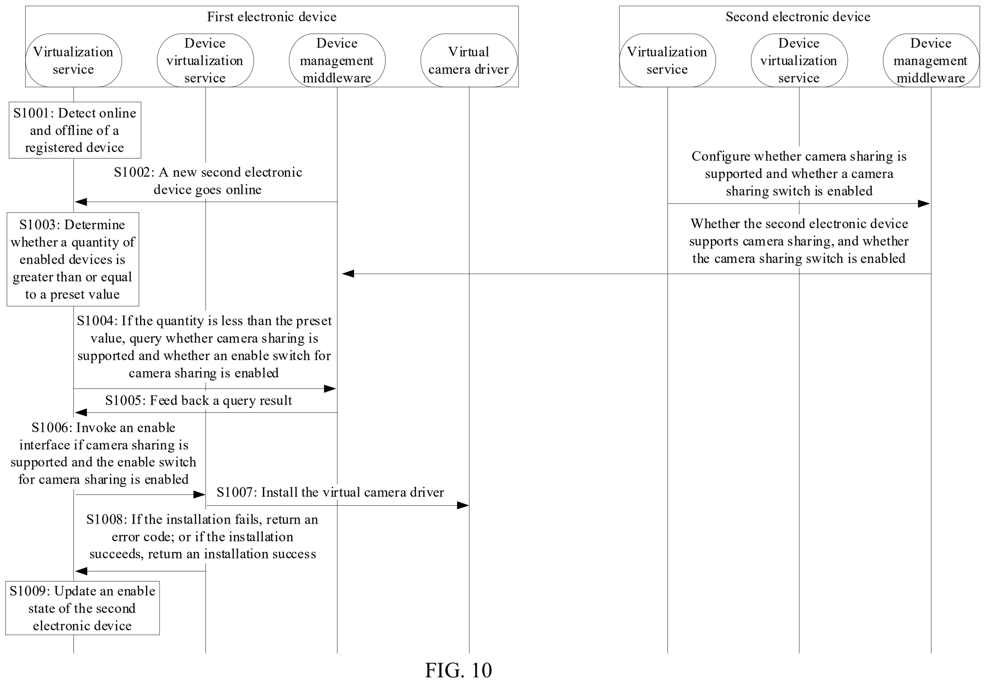

For the trusted ring, refer to the foregoing description. Details are not described herein again. Both the first electronic device and the second electronic device are identity-authenticated. For example, both the first electronic device and the second electronic device log in to a cloud by using a same honor account, and therefore belong to a same trusted ring. When the second electronic device is within a near field communication range of the first electronic device, the second electronic device may automatically go online in the trusted ring, so that the first electronic device discovers the second electronic device and performs point-to-point direct communication with the second electronic device, to implement "going online" without perception by a user. For a procedure performed after the second electronic device goes online in the trusted ring, refer to content shown in the following FIG. 10. Details are not described herein.

The second electronic device further sends, to the first electronic device, whether the second electronic device supports camera sharing, and whether a camera sharing switch of the second electronic device is enabled. Optionally, the second electronic device may further send, to the first electronic device, whether a virtual camera is occupied. The first electronic device allocates a unique identifier to the second electronic device.

S102: The first electronic device determines that the second electronic device supports camera sharing and that the camera sharing switch of the second electronic device is enabled, obtains a parameter of the virtual camera, installs a virtual camera driver, and adds the virtual camera to a camera list of the first electronic device.

Optionally, the first electronic device may further determine that the second electronic device supports camera sharing, that the camera sharing switch of the second electronic device is enabled, and that the virtual camera is unoccupied, and then install the virtual camera driver, and add the virtual camera to the camera list of the first electronic device.

After going online in the trusted ring, the second electronic device sends the parameter of the virtual camera, such as resolution (or referred to as an image sensor size), to the first electronic device. Alternatively, the first electronic device may obtain the parameter of the virtual camera from a network, and a specific manner is not limited.

The virtual camera driver may adapt to the parameter of the virtual camera, and may further control the virtual camera, to correctly parse and display an image collected by the virtual camera. For example, the virtual camera driver of the first electronic device may control the virtual camera to start or stop photographing, and control the virtual camera to adjust a focal length, an aperture, and the like. There may be not only one virtual camera driver, and different virtual camera drivers may be used to adapt to different cameras of the second electronic device (for example, a front-facing camera and a rear-facing camera of a mobile phone).

It should be noted that the image in this application not only includes an image, but also may include each frame of image in a video stream.

The camera list is maintained in a system of the first electronic device, and the camera list includes a camera that can be invoked by the first electronic device, to be provided for selection by a user. The camera list includes a camera of the first electronic device, and further includes a virtual camera. To be specific, the camera list may include a front-facing camera of the first electronic device or the second electronic device, and may further include a rear-facing camera of the first electronic device or the second electronic device. In other words, the first electronic device may not only display an image captured by the front-facing camera or the rear-facing camera of the first electronic device, but also display an image captured by the front-facing camera or the rear-facing camera of the second electronic device.

S103: The first electronic device displays the camera list.

The camera list may be displayed in a target application, or may be displayed in a system (for example, a status bar of an operating system). This is not limited in this application.

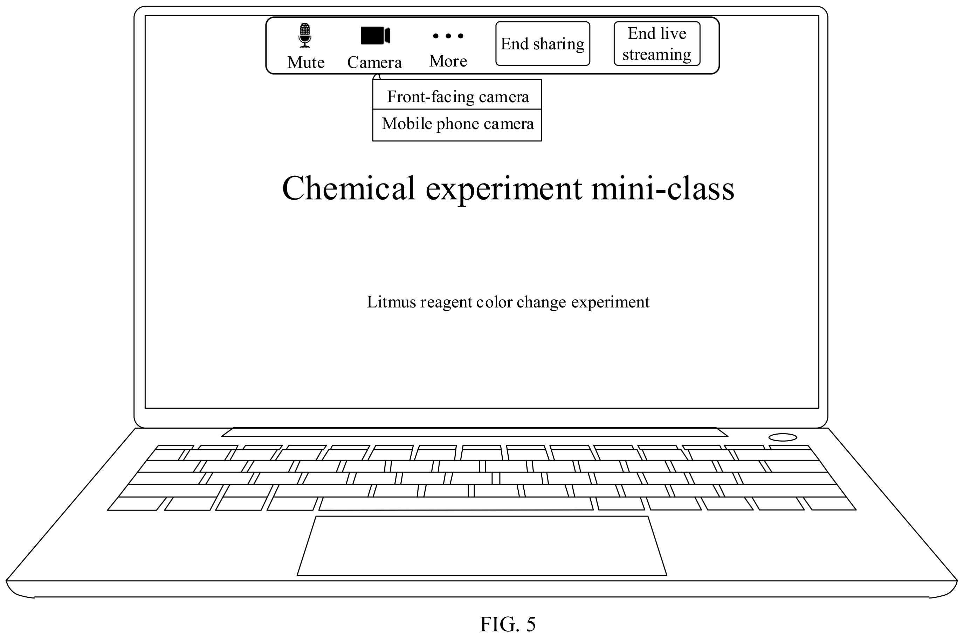

For example, as shown in FIG. 5, an online class meeting application running on a PC is used as an example. A virtual camera (that is, a "mobile phone camera") may be added to a camera list in a system. When selecting a camera, a user may select whether to invoke the virtual camera to capture an image. This process is imperceptible to the user. The user does not need to manually add the virtual camera. When selecting the camera, the user may directly see a virtual camera option that has been added, thereby improving user experience.

S104: In response to an operation of selecting the virtual camera from the camera list by a user, display, in a target application in real time, an image captured by the virtual camera.

In a default state, the target application may display an image captured by a camera of the first electronic device, or display an image captured by the virtual camera of the second electronic device, or simultaneously display the image captured by the camera of the first electronic device, or display the image captured by the virtual camera of the second electronic device. This is not limited in this application.

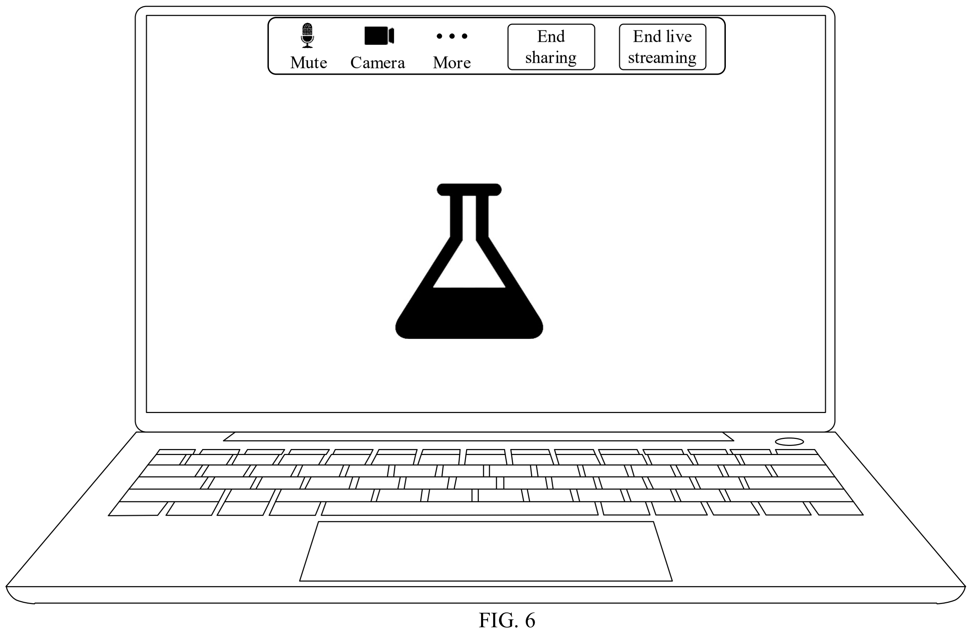

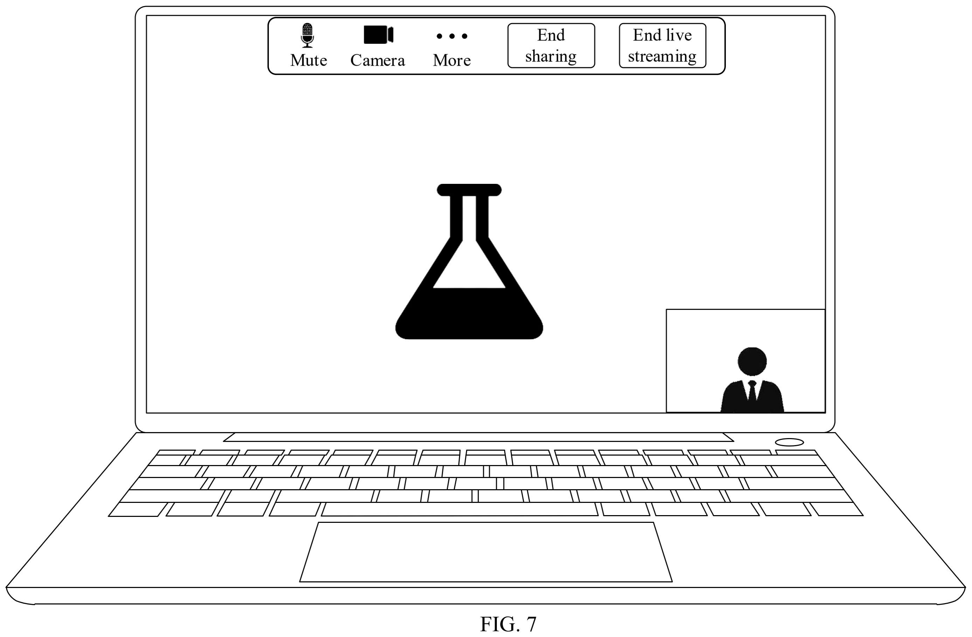

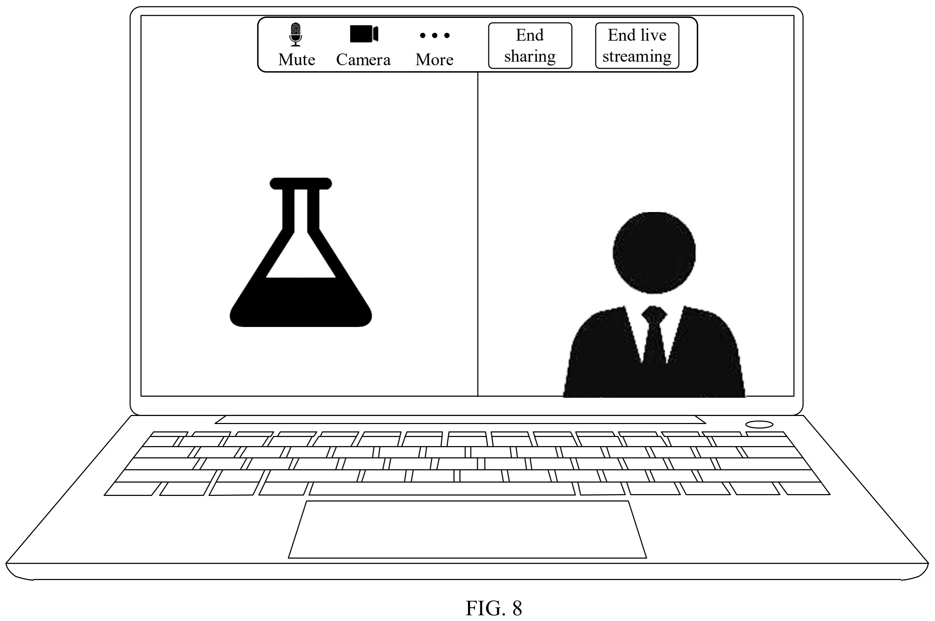

It should be noted that, this application does not impose a limitation that the camera of the first electronic device and the virtual camera are mutually exclusive. As shown in FIG. 6, the first electronic device not only can display, in the target application, the image captured by the virtual camera, but also can display, in the target application, the image capture by the camera of the first electronic device. In other words, the first electronic device can simultaneously display the image captured by the camera of the first electronic device and the image captured by the virtual camera. For example, the image captured by the camera of the first electronic device and the image captured by the virtual camera may be separately displayed in a picture-in-picture form (as shown in FIG. 7) or a split-screen form (as shown in FIG. 8).

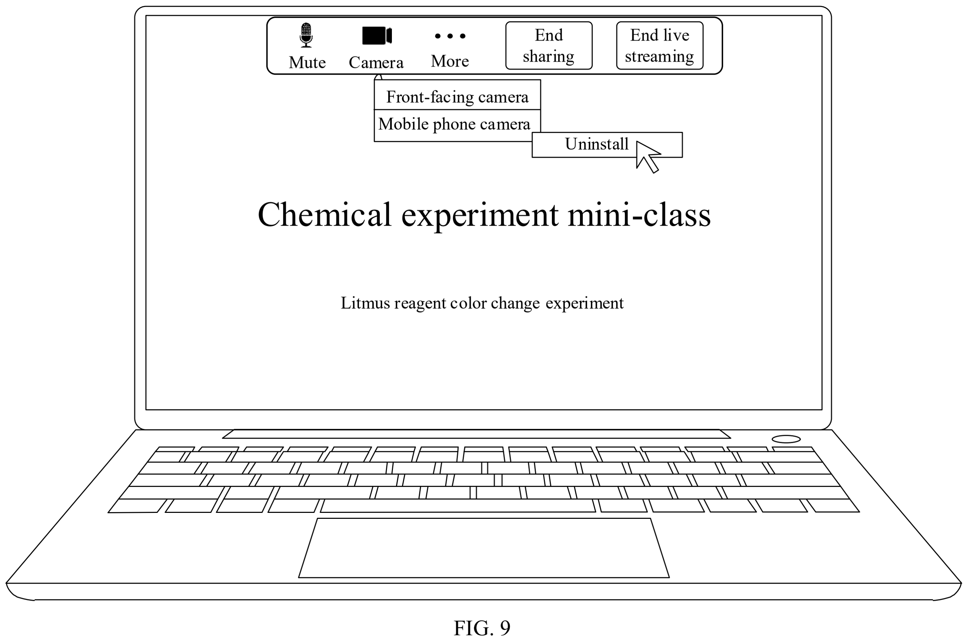

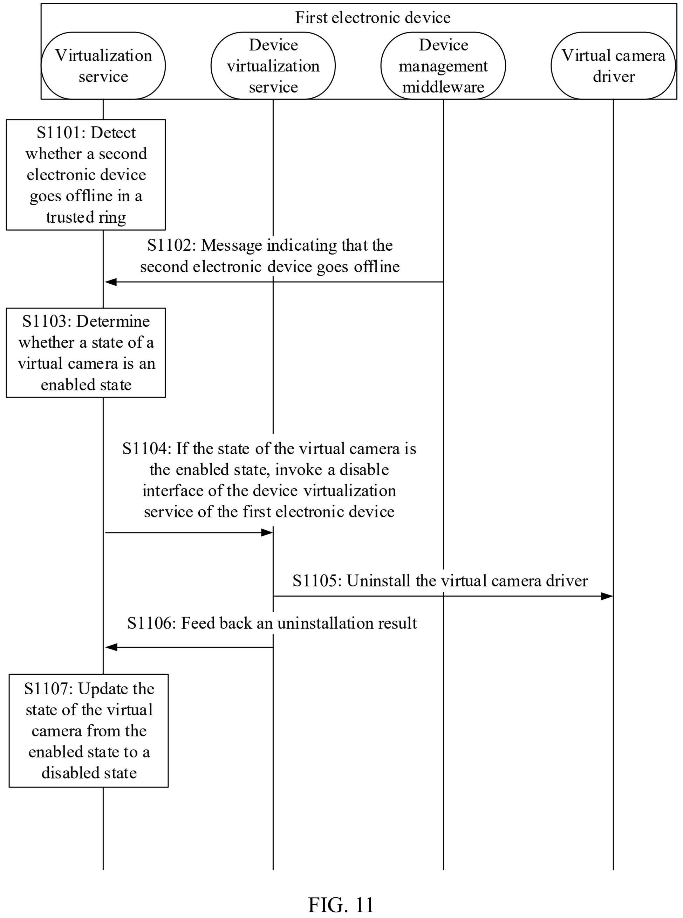

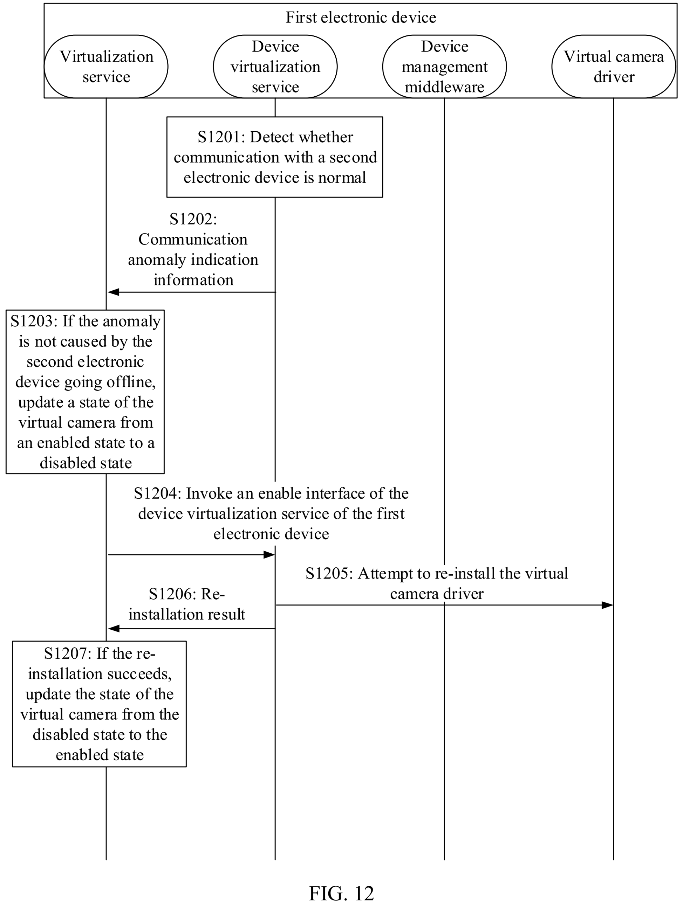

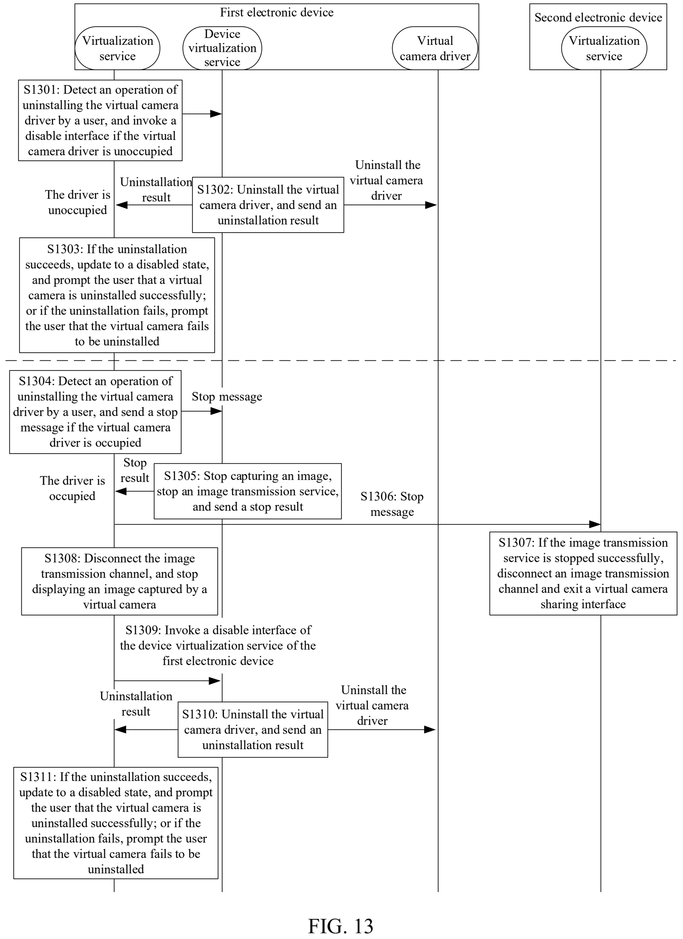

Optionally, if the first electronic device detects that the second electronic device goes offline in the trusted ring or that the first electronic device is in abnormal communication (for example, abnormal signaling transmission) with the second electronic device, or detects an operation of uninstalling (or referred to as disabling) the virtual camera driver by the user (for example, as shown in FIG. 9, the user selects the virtual camera in the camera list through a right click and selects "uninstall"), the first electronic device uninstalls the virtual camera driver, and deletes the virtual camera from the camera list of the first electronic device. For details, separately refer to S1101-S1107 shown in FIG. 11, S1201-S1207 shown in FIG. 12, and S1301-S1311 shown in FIG. 13.

In addition, to avoid uninstalling the virtual camera driver in an image transmission process to cause a data transmission error, if the virtual camera driver is occupied (that is, the first electronic device is receiving, by using the virtual camera driver, the image captured by the virtual camera) before the virtual camera driver is uninstalled, the first electronic device displays prompt information to prompt the user whether to uninstall the virtual camera driver. In response to an operation of determining, by the user, to uninstall the virtual camera driver, the first electronic device stops an image transmission service, and indicates the second electronic device to stop the image transmission service, where the image transmission service is used to transmit the image captured by the virtual camera. Then, the first electronic device and the second electronic device disconnect an image transmission channel, and the first electronic device stops displaying the image captured by the virtual camera, where the image transmission channel is used to carry the image transmission service. Finally, the first electronic device uninstalls the virtual camera driver.

In the camera sharing method provided in this embodiment of this application, the first electronic device and the second electronic device perform automatic discovery and automatic networking based on the trusted ring, thereby saving a process of performing a manual operation for authentication. When determining that the second electronic device can share the virtual camera, the first electronic device obtains the parameter of the virtual camera and installs the adapted virtual camera driver, to automatically adapt to the virtual camera. The first electronic device adds the virtual camera to the camera list of the first electronic device for selection by the user. When the user selects the virtual camera from the camera list, the first electronic device establishes the image transmission channel with the second electronic device, and displays the image captured by the virtual camera. Therefore, automatic configuration of the shared camera is implemented.

The foregoing camera sharing method is described below with reference to the software layers shown in FIG. 3A and FIG. 3B.

As shown in FIG. 10, a procedure in which a second electronic device goes online to enable a virtual camera includes S1001-S1009.

S1001: A virtualization service of a first electronic device (for example, a PC) detects whether an identity-authenticated second electronic device (for example, a mobile phone) goes online in a trusted ring.

The virtualization service of the first electronic device manages states of all identity-authenticated virtual cameras (that is, state management shown in FIG. 3A). In an initial condition, a state of a virtual camera that goes online in the trusted ring is a disabled state. A state of a virtual camera is used to indicate whether the virtual camera can be used by the first electronic device. If the state of the virtual camera is an enabled state, it indicates that the virtual camera can be used by the first electronic device. If the state of the virtual camera is a disabled state, it indicates that the virtual camera cannot be used by the first electronic device.

For other content of this step, refer to step S101.

S1002: When a new second electronic device goes online, a device management middleware of the first electronic device sends, to the virtualization service of the first electronic device, a message indicating that a new second electronic device goes online.

A device interconnection of the first electronic device discovers that a new second electronic device joins the trusted ring in which the first electronic device is located, and establishes a connection to the second electronic device, and then the device management middleware of the first electronic device sends, to the virtualization service of the first electronic device, the message indicating that a new second electronic device goes online.

In addition, a virtualization service of the second electronic device configures a device management middleware of the second electronic device: whether the second electronic device supports camera sharing, and whether a camera sharing switch of the second electronic device is enabled. After the second electronic device goes online, the device management middleware of the second electronic device sends the foregoing configuration to the device management middleware of the first electronic device.

S1003: The virtualization service of the first electronic device determines whether a quantity of enabled second electronic devices is greater than or equal to a preset value (for example, 2).

If the quantity of enabled second electronic devices is greater than or equal to the preset value, no processing is performed. A purpose of limiting the quantity of enabled second electronic devices is to reduce memory consumption, and generally, virtual cameras of two second electronic devices are enough for daily use. Certainly, the quantity of enabled second electronic devices may alternatively not be limited, or may be limited to another quantity.

S1004: If the quantity of enabled second electronic devices is less than the preset value, the virtualization service of the first electronic device queries the following from the device management middleware of the first electronic device: whether the newly-online second electronic device supports camera sharing, and whether a camera sharing switch of the second electronic device is enabled.

S1005: The device management middleware of the first electronic device feeds back a query result to the virtualization service of the first electronic device.

The query result includes: whether the newly-online second electronic device supports camera sharing, and whether the camera sharing switch of the second electronic device is enabled.

S1006: If the second electronic device supports camera sharing, and the camera sharing switch of the second electronic device is enabled, the virtualization service of the first electronic device invokes an enable interface of a device virtualization service of the first electronic device to install a virtual camera driver.

S1007: The device virtualization service of the first electronic device installs the virtual camera driver.

If the installation succeeds, the device virtualization service of the first electronic device adds a virtual camera to a camera list of the first electronic device.

For other content of step S 102-S 107, refer to step S102. Details are not described herein again.

S1008: If the virtual camera driver fails to be installed, the device virtualization service of the first electronic device returns an error code to the virtualization service of the first electronic device, to indicate an installation failure cause. If the virtual camera driver is installed successfully, the device virtualization service of the first electronic device returns, to the virtualization service of the first electronic device, indication information indicating that the installation succeeds.

The installation failure cause may be prompted in a prompt box, so that a user can change settings of the second electronic device to implement camera sharing.

S1009: The virtualization service of the first electronic device updates a state of the virtual camera from a disabled state to an enabled state.

It should be noted that in this application, when the state of the virtual camera is updated from the disabled state to the enabled state, and when the state of the virtual camera is updated from the enabled state to the enabled state, a display interface of the first electronic device may be refreshed at the same time. For example, when the state of the virtual camera is updated from the disabled state to the enabled state, an option of the virtual camera is added to a camera list displayed in a target application (for example, a "mobile phone camera" option in FIG. 5). When the state of the virtual camera is updated from the enabled state to the disabled state, the option of the virtual camera is deleted from the camera list displayed in the target application. A specific manner is not limited.

As shown in FIG. 11, a procedure in which a second electronic device goes offline to cause a virtual camera of the second electronic device to be disabled includes S1101-S1107.

S1101: A virtualization service of a first electronic device (for example, a PC) detects whether an identity-authenticated second electronic device goes offline in a trusted ring.

For this step, refer to step S1001. Details are not described herein again.

S1102: When a second electronic device (for example, a mobile phone) goes offline, a device management middleware of the first electronic device sends, to the virtualization service of the first electronic device, a message indicating that the second electronic device goes offline.

S1103: The virtualization service of the first electronic device determines whether a state of a virtual camera is an enabled state.

S1104: If the state of the virtual camera is the enabled state, the virtualization service of the first electronic device invokes a disable interface of a device virtualization service of the first electronic device to uninstall a virtual camera driver. If the state of the virtual camera is a disabled state, no processing is performed.

S1105: The device virtualization service of the first electronic device uninstalls the virtual camera driver.

If the uninstallation succeeds, the device virtualization service of the first electronic device deletes the virtual camera from a camera list of the first electronic device.

S1106: The device virtualization service of the first electronic device feeds back an uninstallation result to the virtualization service of the first electronic device.

The uninstallation result indicates whether the virtual camera driver is uninstalled successfully.

S1107: If the virtual camera is uninstalled successfully, the virtualization service of the first electronic device updates the state of the virtual camera from the enabled state to the disabled state.

As shown in FIG. 12, a procedure in which abnormal communication between a first electronic device and a second electronic device causes a virtual camera to be disabled includes S1201-S1207.

S1201: A device virtualization service of a first electronic device (for example, a PC) detects whether communication with a second electronic device is normal.

S1202: If detecting that communication with the second electronic device is abnormal, the device virtualization service of the first electronic device sends communication anomaly indication information to a virtualization service of the first electronic device.

S1203: The virtualization service of the first electronic device determines whether the anomaly is caused by the second electronic device going offline. If the anomaly is not caused by the second electronic device going offline, the virtualization service of the first electronic device updates a state of a virtual camera from an enabled state to a disabled state.

If the anomaly is caused by the second electronic device going offline, the foregoing S1102-S1107 are performed; or otherwise, S1204 continues to be performed.

S1204: The virtualization service of the first electronic device invokes an enable interface of a device virtualization service of the first electronic device to attempt to re-install a virtual camera driver.

S1205: The device virtualization service of the first electronic device attempts to re-install the virtual camera driver.

If the re-installation fails, the device virtualization service of the first electronic device deletes the virtual camera from a camera list of the first electronic device; or otherwise, the camera list of the first electronic device is not processed.

S1206: The device virtualization service of the first electronic device feeds back a re-installation result to the virtualization service of the first electronic device.

The re-installation result indicates whether the virtual camera is re-installed successfully.

S1207: If the virtual camera is re-installed successfully, the virtualization service of the first electronic device updates the state of the virtual camera from the disabled state to the enabled state; or otherwise, performs no processing.

As shown in FIG. 13, a procedure in which detection of an operation of uninstalling a virtual camera driver by a user causes a virtual camera to be disabled includes S1301-S1311. A processing procedure performed when the virtual camera driver is unoccupied includes S1301-S1303, and a processing procedure performed when the virtual camera driver is occupied includes S1304-S1311.

S1301: A virtualization service of a first electronic device detects an operation of uninstalling a virtual camera driver by a user. If the virtual camera driver is unoccupied, the virtualization service of the first electronic device invokes a disable interface of a device virtualization service of the first electronic device to uninstall the virtual camera driver.

S1302: The device virtualization service of the first electronic device uninstalls the virtual camera driver, and sends an uninstallation result to the virtualization service.

The uninstallation result indicates whether the virtual camera driver is uninstalled successfully.

S1303: If the uninstallation succeeds, the virtualization service of the first electronic device updates a state of a virtual camera from an enabled state to a disabled state, and prompts the user that the virtual camera is uninstalled successfully. If the uninstallation fails, the virtualization service prompts the user that the virtual camera fails to be uninstalled.

If the uninstallation succeeds, the device virtualization service of the first electronic device further deletes the virtual camera from a camera list of the first electronic device.

S1304: If the virtual camera driver is occupied, the virtualization service of the first electronic device displays prompt information to prompt the user whether to determine to uninstall the virtual camera driver. If the user determines to uninstall the virtual camera driver, the virtualization service of the first electronic device sends a stop message to the device virtualization service of the first electronic device, to stop an image transmission service.

S1305: The device virtualization service of the first electronic device stops the image transmission service, and sends a stop result to the virtualization service of the first electronic device.

The stop result may include a success in stopping the image transmission service or a failure in stopping the image transmission service.

S1306: The virtualization service of the first electronic device sends a stop message to a virtualization service of a second electronic device, to stop the image transmission service.

S1307: If the image transmission service is stopped successfully, the virtualization service of the second electronic device disconnects an image transmission channel and exits a virtual camera sharing interface.

S1308: If the image transmission service is stopped successfully, the virtualization service of the first electronic device disconnects the image transmission channel, and stops displaying an image captured by the virtual camera.

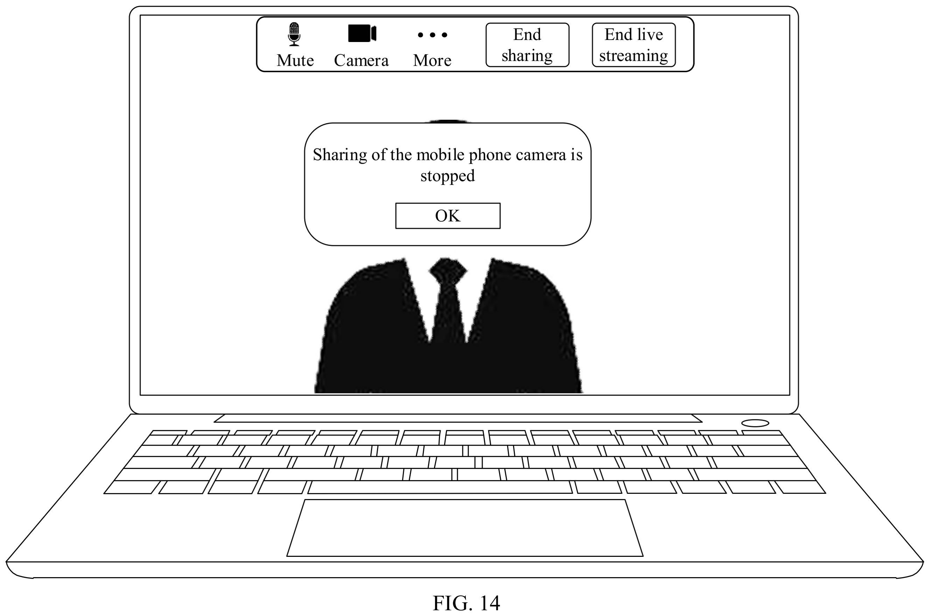

The device virtualization service of the first electronic device may further prompt the user that sharing of the virtual camera of the second electronic device is stopped. For example, as shown in FIG. 14, the first electronic device may display "Sharing of the mobile phone camera is stopped", to indicate that the second electronic device stops sharing the virtual camera.

S1309: The virtualization service of the first electronic device invokes a disable interface of the device virtualization service of the first electronic device to uninstall the virtual camera driver.

That the virtual camera driver is occupied means that the image transmission service is being performed by using the virtual camera driver, that is, the first electronic device is receiving, by using the virtual camera driver, the image captured by the virtual camera.

S1310: The device virtualization service of the first electronic device uninstalls the virtual camera driver, and sends an uninstallation result to the virtualization service of the first electronic device.

The uninstallation result indicates whether the virtual camera driver is uninstalled successfully.

S1311: If the uninstallation succeeds, the virtualization service of the first electronic device updates the state of the virtual camera from the enabled state to the disabled state, and prompts the user that the virtual camera is uninstalled successfully. If the uninstallation fails, the virtualization service prompts the user that the virtual camera fails to be uninstalled.

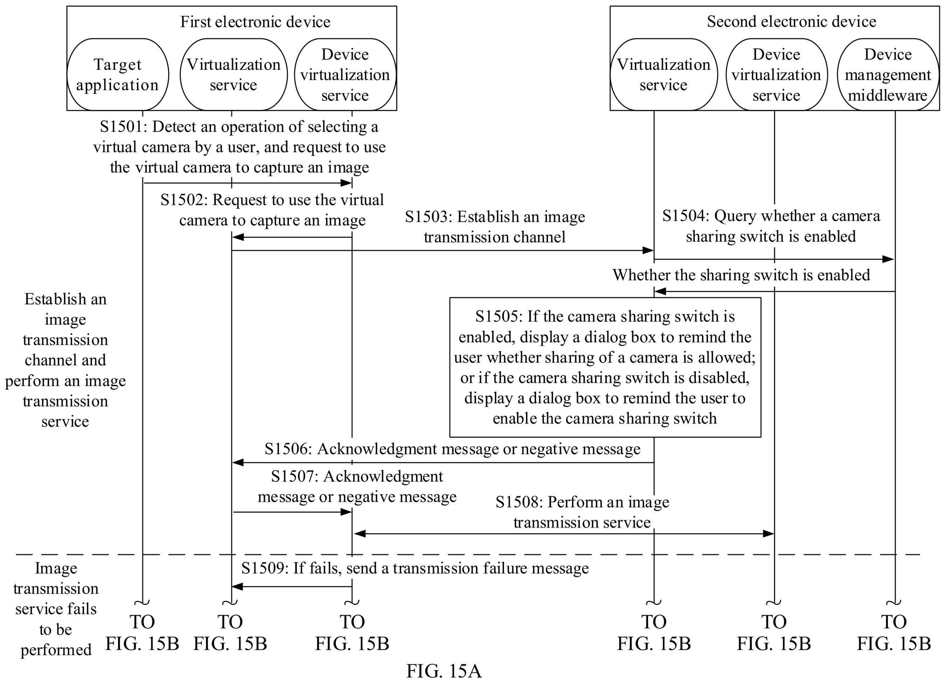

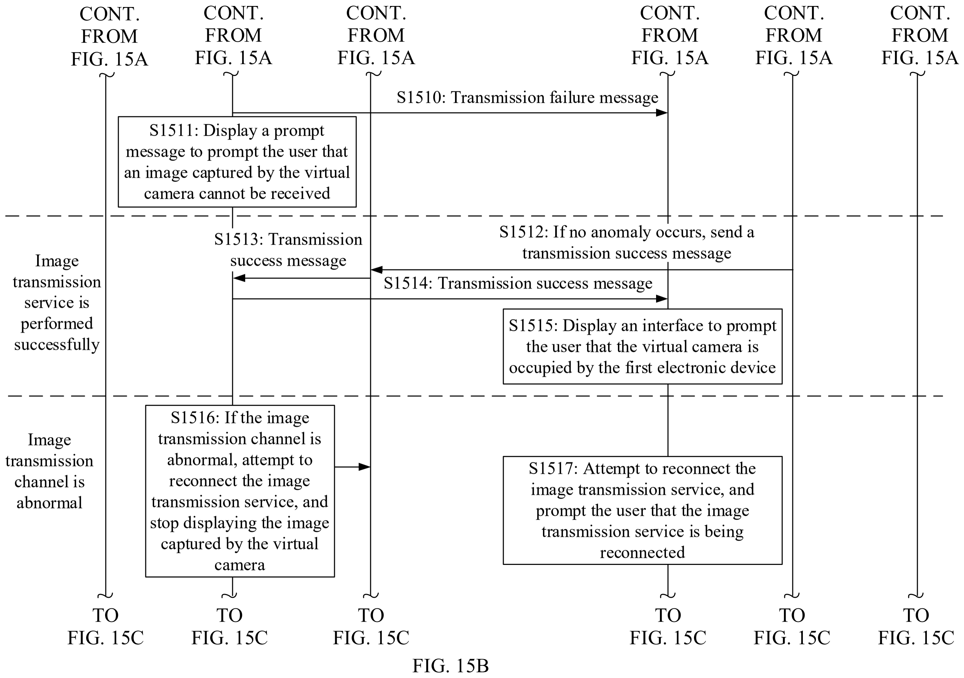

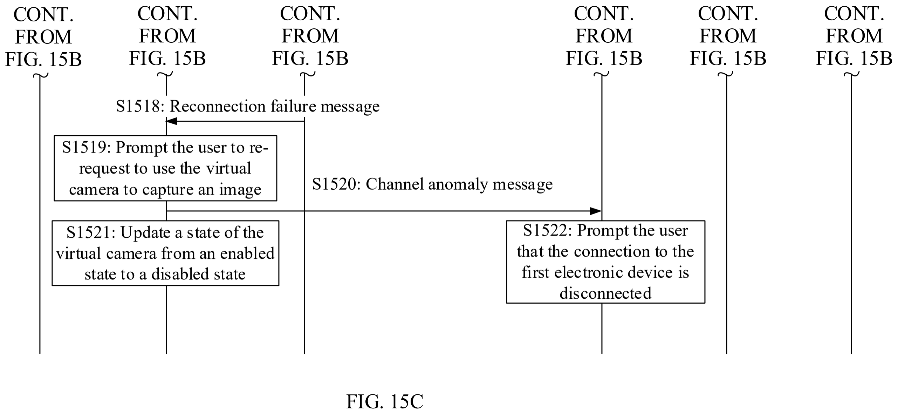

As shown in FIG. 15A to FIG. 15C, a procedure in which a target application uses a virtual camera includes S1501-S1522. A processing procedure for establishing an image transmission channel and performing an image transmission service includes S1501-S1508. A processing procedure performed when an image transmission service fails to be performed includes step S1509-S1511. A processing procedure performed when an image transmission service is performed successfully includes step S1512-S1515. A processing procedure performed when an image transmission channel is abnormal after an image transmission service is performed successfully includes step S1516-S1522.

S1501: A target application of a first electronic device detects an operation of selecting a virtual camera from a displayed camera list by a user, and requests, from a device virtualization service of the first electronic device, to use the virtual camera to capture an image.

S1502: The device virtualization service of the first electronic device requests, from a virtualization service of the first electronic device, to use the virtual camera to capture an image.

S1503: The virtualization service of the first electronic device establishes an image transmission channel.

The image transmission channel may be an image transmission channel based on near field communication such as Bluetooth or a wireless local area network (wireless local area network, WLAN).

S1504: A virtualization service of a second electronic device queries, from a device management middleware of the second electronic device, whether a camera sharing switch is enabled.

Correspondingly, the device management middleware of the second electronic device feeds back, to the virtualization service of the second electronic device, whether the camera sharing switch is enabled.

S1505: If the camera sharing switch is enabled, the virtualization service of the second electronic device displays a dialog box to prompt the user whether sharing of a camera is allowed; or if the camera sharing switch is disabled, the virtualization service of the second electronic device displays a dialog box to prompt the user to enable the camera sharing switch.

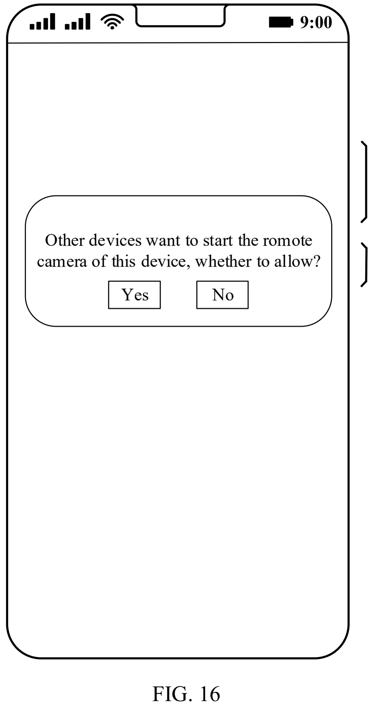

For example, as shown in FIG. 16, if the camera sharing switch is enabled, regardless of whether the second electronic device is in a lock screen state, a screen-off state, or a screen-on state, the second electronic device can display a dialog box to prompt the user whether sharing of a camera is allowed. If the user selects "Yes", the second electronic device allows the first electronic device to share a camera. If the user selects "No", the second electronic device does not allow the first electronic device to use the virtual camera.

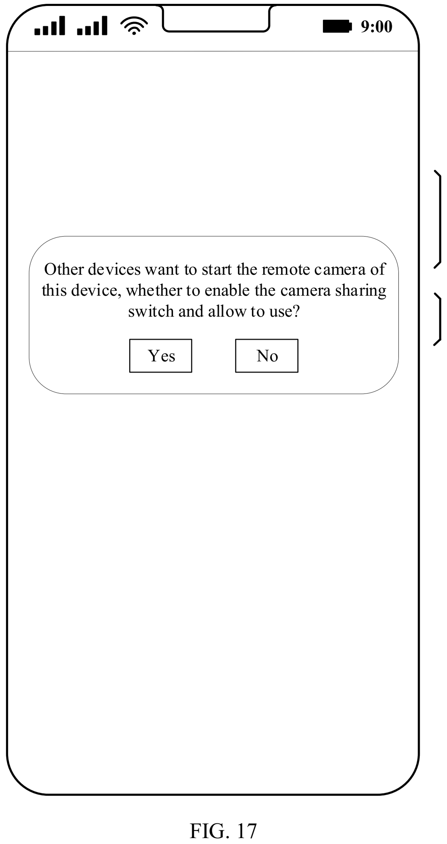

As shown in FIG. 17, if the camera sharing switch is disabled, regardless of whether the second electronic device is in a lock screen state, a screen-off state, or a screen-on state, the second electronic device can display a dialog box to prompt the user to enable the camera sharing switch. If the user selects "Yes", the second electronic device jumps to a setting interface, so that the user operates the camera sharing switch to allow the first electronic device to use the virtual camera. If the user selects "No", the second electronic device does not allow the first electronic device to share a camera. Optionally, the second electronic device may also prompt whether sharing of a camera is allowed, to simplify an operation procedure of the user and improve user experience.

S1506: If the user allows sharing of a camera, the virtualization service of the second electronic device sends an acknowledgment message to the virtualization service of the first electronic device, to indicate that the camera is allowed to be shared. If the user unallows sharing of a camera, the virtualization service of the second electronic device sends a negative message to the virtualization service of the first electronic device, to reject sharing of the camera.

S1507: The virtualization service of the first electronic device sends an acknowledgment message or a negative message to the device virtualization service of the first electronic device.

S1508: If the negative message is received, the device virtualization service of the first electronic device ends the procedure. If the acknowledgment message is received, the device virtualization service of the first electronic device and a device virtualization service of the second electronic device perform an image transmission service (that is, transmit an image captured by the virtual camera).

S1509: If the image transmission service fails to be performed, the device virtualization service of the first electronic device sends a transmission failure message to the virtualization service of the first electronic device.

S1510: The virtualization service of the first electronic device sends a transmission failure message to the virtualization service of the second electronic device.

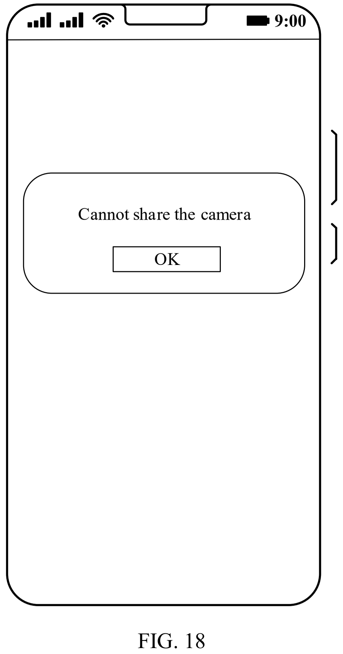

The virtualization service of the second electronic device may display a prompt message to prompt the user that an image transmission channel cannot be established with the first electronic device. For example, as shown in FIG. 18, a dialog box may be displayed to prompt the user that an image transmission channel cannot be established with the first electronic device.

If the failure is caused by the second electronic device going offline, the foregoing S1102-S1107 are performed; or otherwise, S1511 continues to be executed.

S1511: The virtualization service of the first electronic device displays a prompt message to prompt the user that an image captured by the virtual camera cannot be received.

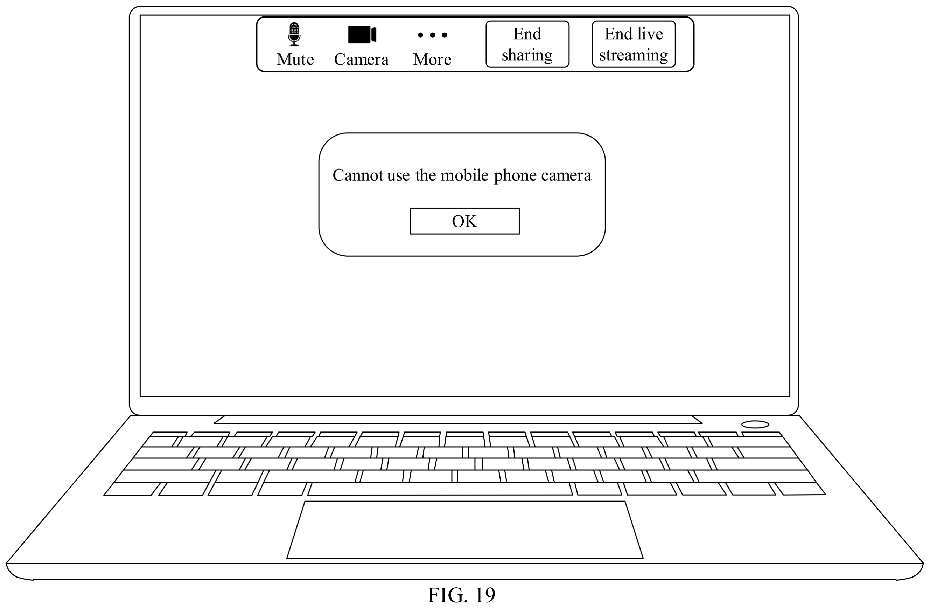

For example, as shown in FIG. 19, a dialog box may be displayed to prompt the user that "The mobile phone camera cannot be used".

S1512: If the image transmission service is performed successfully, the device virtualization service of the second electronic device initializes the virtual camera to determine whether an image transmission anomaly exists, and if no anomaly exists, sends a transmission success message to the device virtualization service of the first electronic device.

S1513: The device virtualization service of the first electronic device sends a transmission success message to the virtualization service of the first electronic device.

S1514: The virtualization service of the first electronic device sends a transmission success message to the virtualization service of the second electronic device.

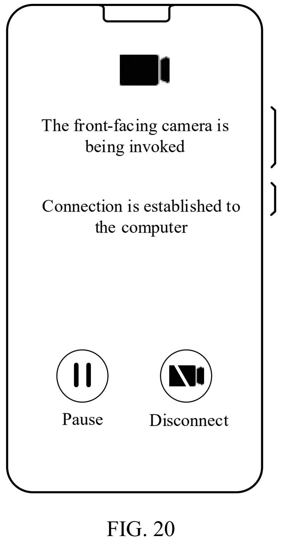

The virtualization service of the second electronic device may display a prompt message to prompt the user to establish an image transmission channel with the first electronic device. For example, as shown in FIG. 20, the second electronic device may prompt the user that an image transmission channel is established with the first electronic device (for example, "Connection is established to the computer").

In addition, the target application displays, in real time, the image captured by the virtual camera.

S1515: The virtualization service of the second electronic device displays an interface to prompt the user that the virtual camera is occupied by the first electronic device.

For example, as shown in FIG. 20, regardless of whether the second electronic device is in a lock screen state, a screen-off state, or a screen-on state, the second electronic device can display an interface to prompt the user that the virtual camera is occupied by the first electronic device.

S1516: If the image transmission channel is abnormal, the virtualization service of the first electronic device indicates the device virtualization service of the first electronic device to attempt to reconnect the image transmission service, and stops displaying the image captured by the virtual camera.

S1517: The virtualization service of the second electronic device indicates the device virtualization service of the second electronic device to attempt to reconnect the image transmission service, and prompts the user that the image transmission service is being reconnected.

S1518: If the reconnection fails, the device virtualization service of the first electronic device sends a reconnection failure message to the virtualization service of the first electronic device.

S1519: The virtualization service of the first electronic device prompts the user to re-request to use the virtual camera to capture an image.

S1520: The virtualization service of the first electronic device sends a channel anomaly message to the virtualization service of the second electronic device.

S1521: The virtualization service of the first electronic device updates a state of the virtual camera of the second electronic device from an enabled state to a disabled state.

S1522: The virtualization service of the second electronic device prompts the user that the connection to the first electronic device is disconnected.

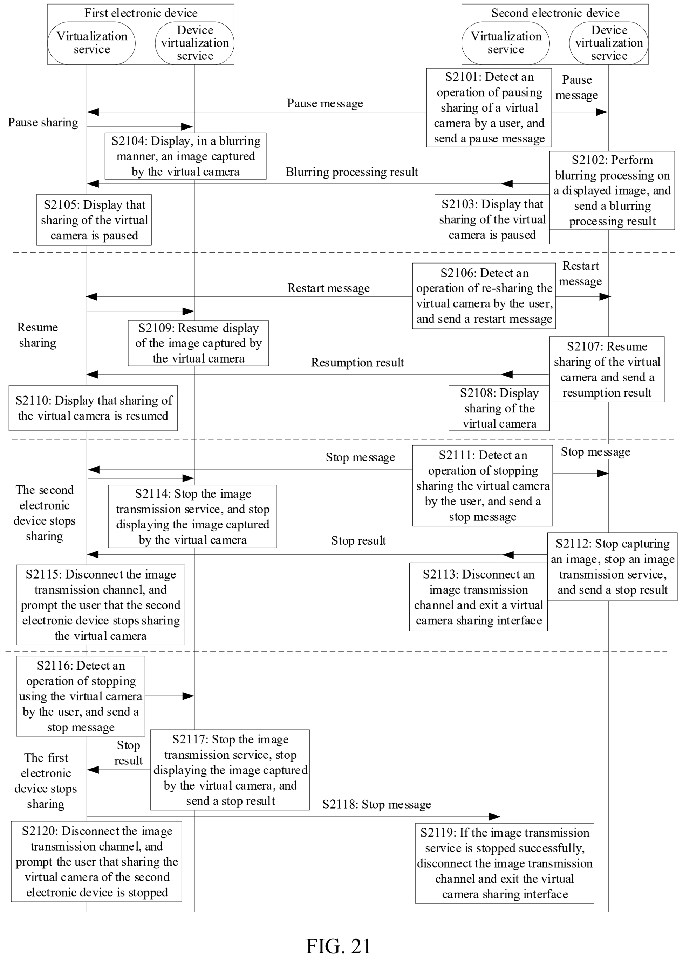

As shown in FIG. 21, a process in which a user pauses or stops sharing of a virtual camera includes S2101-S2120. A processing procedure in which a user pauses sharing of a virtual camera includes S2101-S2105. A processing procedure in which a user resumes sharing of a virtual camera includes steps S2106-S2110. A processing procedure in which a user stops sharing a virtual camera on a second electronic device side includes step S2111-S2115. A processing procedure in which a user stops using a shared virtual camera on a first electronic device side includes step S2116-S2120.

S2101: A virtualization service of a second electronic device detects an operation of pausing sharing of a virtual camera by a user, sends a pause message to a device virtualization service of the second electronic device, and sends a pause message to a device virtualization service of a first electronic device through a virtualization service of the first electronic device.

For example, when the user taps a "Pause" button shown in FIG. 20, the virtualization service of the second electronic device detects the operation of pausing sharing of the virtual camera by the user.

It should be noted that, after the user taps "Pause", the second electronic device reduces a frame rate of an image transmitted to the first electronic device, that is, the second electronic device sends, to the first electronic device at a frame rate of maintaining an image transmission service, an image captured by the virtual camera. Correspondingly, the first electronic device receives, at the frame rate of maintaining the image transmission service, the image captured by the virtual camera. In one aspect, power consumption may be reduced, and in another aspect, the image transmission service may be prevented from being interrupted, so that image display may be resumed at any time. Otherwise, it takes a relatively long time to restart the image transmission service, and during this time, the image transmission service cannot be performed, and an image cannot be displayed.

S2102: The device virtualization service of the second electronic device performs blurring processing on a displayed image, and sends a blurring processing result to the virtualization service of the second electronic device through the virtualization service of the first electronic device.

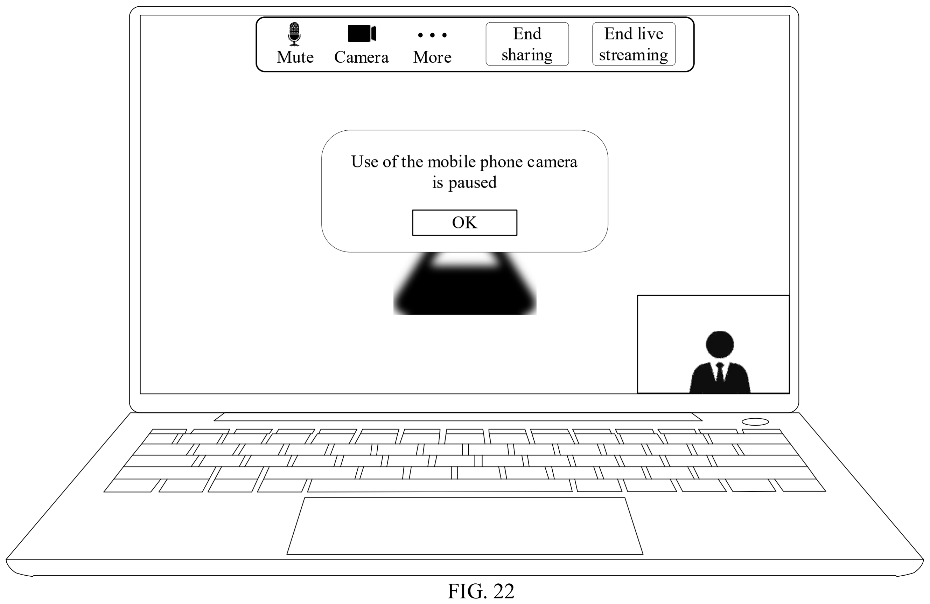

For example, as shown in FIG. 22, the second electronic device may display an image obtained after the blurring processing.

The blurring processing result may include a blurring processing success or a blurring processing failure.

S2103: The virtualization service of the second electronic device displays that sharing of the virtual camera is paused.

For example, as shown in FIG. 22, the second electronic device may display an "OK" button, to indicate that sharing of the virtual camera is paused.

S2104: The device virtualization service of the first electronic device displays, in a blurring manner, an image captured by the virtual camera.

In this case, the image captured by the virtual camera is at a relatively low frame rate, and obvious lagging occurs if the image is still displayed with original sharpness. Therefore, blurring processing is performed on the image captured by the virtual camera, to make image lagging unobvious.

For example, as shown in FIG. 22, the first electronic device may display an image that is captured by the virtual camera and that is obtained after the blurring processing.

S2105: The virtualization service of the first electronic device displays that sharing of the virtual camera is paused.

For example, as shown in FIG. 22, the first electronic device may display "Use of the mobile phone camera is paused", to indicate that sharing of the virtual camera is paused.

S2106: The virtualization service of the second electronic device detects an operation of re-sharing the virtual camera by the user, sends a restart message to the device virtualization service of the second electronic device, and sends a restart message to the virtualization service of the first electronic device through the virtualization service of the first electronic device.

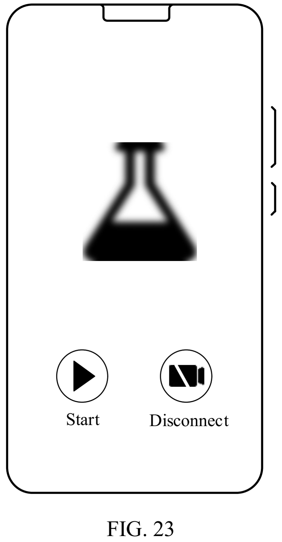

For example, as shown in FIG. 23, if the user taps a "Start" button, sharing of the virtual camera re-starts.

S2107: The device virtualization service of the second electronic device resumes sharing of the virtual camera, and sends a resumption result to the virtualization service of the second electronic device through the virtualization service of the first electronic device.

For example, as shown in FIG. 20, the second electronic device may re-display a virtual camera sharing interface.

Resuming sharing of the virtual camera means transmitting an image at a normal frame rate by using an image transmission channel. The resumption result may include a resumption success or a resumption failure.

S2108: The virtualization service of the second electronic device displays sharing of the virtual camera.

For example, the second electronic device may re-display the interface shown in FIG. 20, to indicate that the virtual camera is being shared.

S2109: The device virtualization service of the first electronic device resumes display of the image captured by the virtual camera.

The device virtualization service of the first electronic device displays, at a normal frame rate, an image on which blurring processing is not performed.

S2110: The virtualization service of the first electronic device displays that the second electronic device resumes sharing of the virtual camera.

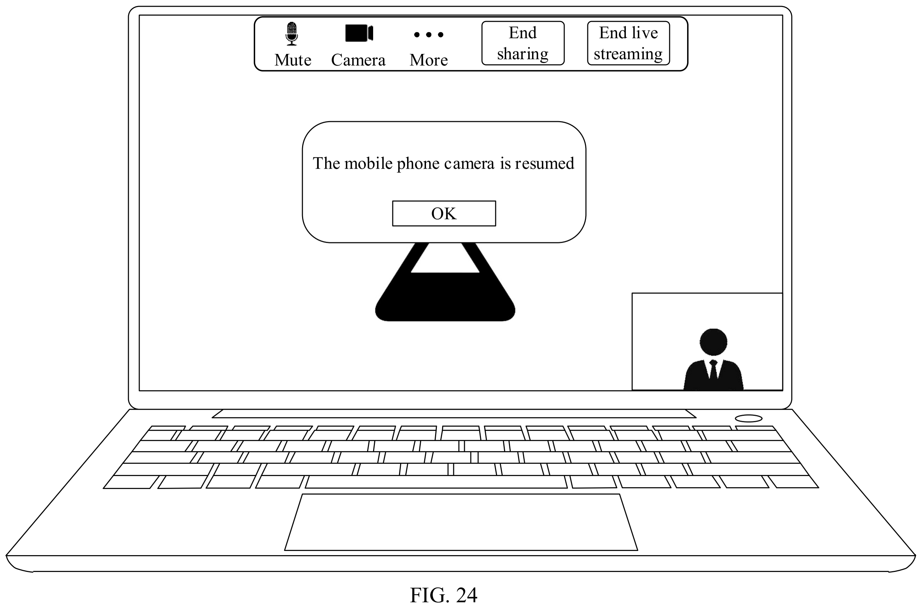

For example, as shown in FIG. 24, the first electronic device may display "The mobile phone camera is resumed", to indicate that the second electronic device resumes sharing of the virtual camera.

S2111: The virtualization service of the second electronic device detects an operation of stopping sharing the virtual camera by the user, sends a stop message to the device virtualization service of the second electronic device, and sends a stop message to the device virtualization service of the first electronic device through the virtualization service of the first electronic device.

For example, when the user taps a "Disconnect" button shown in FIG. 20, the virtualization service of the second electronic device detects the operation of stopping the virtual camera by the user.

S2112: The device virtualization service of the second electronic device stops capturing an image, stops the image transmission service, and sends a stop result to the virtualization service of the first electronic device through the virtualization service of the second electronic device.

The stop result may include a success in stopping the image transmission service or a failure in stopping the image transmission service.

S2113: The virtualization service of the second electronic device disconnects an image transmission channel and exits a virtual camera sharing interface.

S2114: The device virtualization service of the first electronic device stops the image transmission service, and stops displaying the image captured by the virtual camera.

For example, as shown in FIG. 14, if the first electronic device is still capturing an image by using a camera of the first electronic device in this case, the first electronic device displays, in a target application, the image capture by using the camera of the first electronic device.

S2115: The virtualization service of the first electronic device disconnects the image transmission channel, and prompts the user that sharing of the virtual camera of the second electronic device is stopped.

S2116: The virtualization service of the first electronic device detects an operation of stopping using the virtual camera by the user, and sends a stop message to the device virtualization service of the first electronic device.

For example, when the user taps an "End sharing" button shown in FIG. 5 or cancels a mobile phone camera option, the virtualization service of the first electronic device detects the operation of stopping sharing the virtual camera by the user.

S2117: The device virtualization service of the first electronic device stops the image transmission service, stops displaying the image captured by the virtual camera, and sends a stop result to the virtualization service of the first electronic device.

The stop result may include a success in stopping the image transmission service or a failure in stopping the image transmission service.

S2118: The virtualization service of the first electronic device sends a stop message to the virtualization service of the second electronic device, to stop the image transmission service.

S2119: If the image transmission service is stopped successfully, the virtualization service of the second electronic device disconnects the image transmission channel and exits the virtual camera sharing interface.

S2120: The device virtualization service of the first electronic device disconnects the image transmission channel, and prompts the user that sharing of the virtual camera of the second electronic device is stopped.

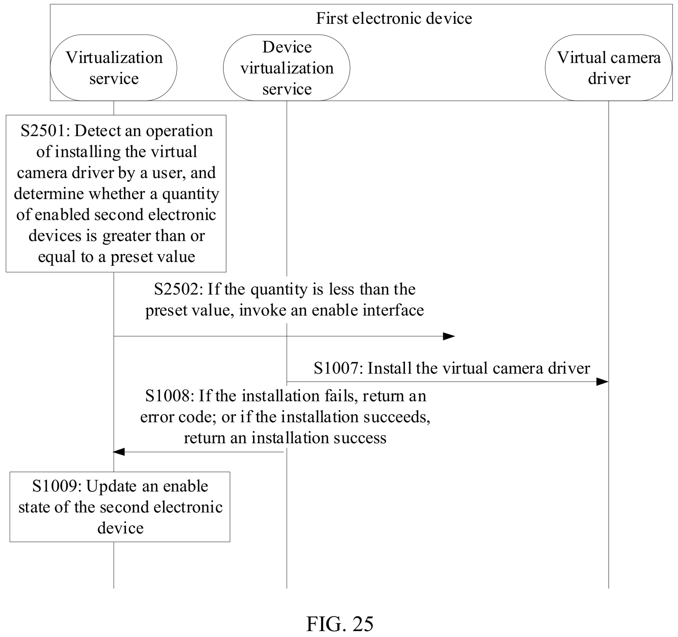

The foregoing process of installing the virtual camera driver is automatically performed, and the user may manually install the virtual camera driver. As shown in FIG. 25, a processing procedure in which a user installs a virtual camera driver includes S2501-S2502 and S1007-S1009.

S2501: A virtualization service of a first electronic device detects an operation of installing a virtual camera driver by a user, and determines whether a quantity of enabled second electronic devices is greater than or equal to a preset value (for example, 2).

For this step, refer to step S1003. Details are not described herein again.

S2502: If the quantity of enabled second electronic devices is less than the preset value, the virtualization service of the first electronic device invokes an enable interface of a device virtualization service of the first electronic device to install the virtual camera driver.

For the following content, refer to step S1007-S1009. Details are not described herein again.

The user may manually switch a virtual camera on the second electronic device, for example, switch from a first virtual camera of the second electronic device (for example, a front-facing camera of a mobile phone) to a second virtual camera of the second electronic device (for example, a rear-facing camera of the mobile phone). In this case, the user first uninstalls a first camera driver according to step S1301-S1311 shown in FIG. 13, and then installs a second camera driver according to step S1006-S1009 shown in FIG. 10, to switch the virtual camera. For details, refer to related steps. Details are not described herein again.

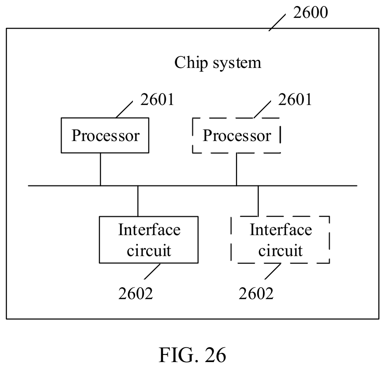

As shown in FIG. 26, an embodiment of this application further provides a chip system. The chip system 2600 includes at least one processor 2601 and at least one interface circuit 2602. The at least one processor 2601 and the at least one interface circuit 2602 may be interconnected through a line. The processor 2601 is configured to support an electronic device in implementing the steps in the foregoing method embodiments, for example, the methods shown in FIG. 4, FIG. 10, FIG. 11, and FIG. 12, FIG. 13, FIG. 15A to FIG. 15C, FIG. 21, and FIG. 25. The at least one interface circuit 2602 may be configured to receive a signal from another apparatus (such as a memory), or send a signal to another apparatus (such as a communication interface). The chip system may include a chip, or may include another discrete device.

An embodiment of this application further provides a computer-readable storage medium, and the computer-readable storage medium includes instructions. When the instructions are run on the foregoing electronic device, the electronic device is enabled to perform the steps in the foregoing method embodiments, for example, to perform the methods shown in FIG. 4, FIG. 10, FIG. 11, and FIG. 12, FIG. 13, FIG. 15A to FIG. 15C, FIG. 21, and FIG. 25.

An embodiment of this application further provides a computer program product including instructions. When the instructions are run on the foregoing electronic device, the electronic device is enabled to perform the steps in the foregoing method embodiments, for example, to perform the methods shown in FIG. 4, FIG. 10, FIG. 11, and FIG. 12, FIG. 13, FIG. 15A to FIG. 15C, FIG. 21, and FIG. 25.

For technical effects of the chip system, the computer-readable storage medium, and the computer program product, refer to the technical effects of the foregoing method embodiments.

It should be understood that in various embodiments of this application, sequence numbers of the foregoing processes do not mean a sequence of execution. The execution sequence of the processes should be determined based on functions and internal logic of the processes, and should not constitute any limitation on an implementation process of the embodiments of this application.

A person of ordinary skill in the art may be aware that the example modules and algorithm steps described with reference to the embodiments disclosed in this specification can be implemented by using electronic hardware or a combination of computer software and electronic hardware. Whether these functions are performed by hardware or software depends on specific applications and design constraints of the technical solutions. A person skilled in the art may use different methods to implement the described functions for each specific application, but it should not be considered that such an implementation goes beyond the scope of this application.

A person skilled in the art may clearly understand that for ease and brevity of description, for a specific operation process of the system, apparatus, and module described above, refer to a corresponding process in the foregoing method embodiments. Details are not described herein again.

In the several embodiments provided in this application, it should be understood that the disclosed system, device, and method may be implemented in another manner. For example, the described device embodiment is merely an example. For example, division of the modules is merely logical function division and there may be other division manners during actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in an electrical form, a mechanical from, or another form.

The modules described as separate components may or may not be physically separate, and components displayed as modules may or may not be physical modules, may be located in one device, or may be distributed on a plurality of devices. Some or all of the modules may be selected based on an actual requirement, to achieve the objectives of the solutions in the embodiments.

In addition, functional modules in the embodiments of this application may be integrated into one device, or each of the modules may exist alone physically, or two or more modules may be integrated into one device.

All or some of the foregoing embodiments may be implemented by using software, hardware, firmware, or any combination thereof. When being implemented by using a software program, all or some of the foregoing embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium (for example, a solid state disk (solid state disk, SSD)), or the like.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. A camera sharing method, comprising:
detecting, by a first electronic device, that an identity-authenticated second electronic device goes online in a MagicRing, wherein the MagicRing refers to a networking form in which a plurality of identity-authenticated devices perform automatic discovery and automatic networking; and performing, by the first electronic device, point-to-point direct communication with the second electronic device;
determining, by the first electronic device, that the second electronic device supports camera sharing and that a camera sharing switch of the second electronic device is enabled, obtaining a parameter of a virtual camera and installing a virtual camera driver, and adding the virtual camera to a camera list of the first electronic device, wherein the virtual camera refers to a camera of the second electronic device, and the virtual camera driver is configured to adapt to the parameter of the virtual camera;
displaying, by the first electronic device, the camera list; and
in response to an operation of selecting the virtual camera from the camera list by a user, establishing, by the first electronic device, an image transmission channel with the second electronic device, and displaying, in real time, an image captured by the virtual camera.

2. The method according to claim 1, further comprising:
detecting, by the first electronic device, that the second electronic device goes offline in the MagicRing, or detecting an operation of uninstalling the virtual camera driver by the user, or detecting that communication with the second electronic device is abnormal; and
uninstalling, by the first electronic device, the virtual camera driver, and deleting the virtual camera from the camera list of the first electronic device.

3. The method according to claim 2, further comprising:
if the virtual camera driver is occupied before the virtual camera driver is uninstalled, displaying, by the first electronic device, prompt information to prompt the user whether to uninstall the virtual camera driver;
in response to an operation of determining, by the user, to uninstall the virtual camera driver, stopping, by the first electronic device, an image transmission service, and indicating the second electronic device to stop the image transmission service; and
disconnecting, by the first electronic device, the image transmission channel, and stopping displaying the image captured by the virtual camera.

4. The method according to any one of claims 1-3, further comprising:
receiving, by the first electronic device, a pause message from the second electronic device, wherein the pause message is used to indicate that the user pauses sharing of the virtual camera; and
receiving, by the first electronic device at a frame rate of maintaining the image transmission service, the image captured by the virtual camera, and displaying, in a blurring manner, the image captured by the virtual camera.

5. The method according to any one of claims 1-4, further comprising:
in response to an operation of stopping using the virtual camera by the user, or in response to receiving a stop message from the second electronic device, wherein the stop message is used to indicate that the user stops sharing the virtual camera, stopping, by the first electronic device, the image transmission service, and stopping displaying the image captured by the virtual camera.

6. The method according to any one of claims 1-5, further comprising:
in response to an operation of installing the virtual camera driver by the user, determining, by the first electronic device, whether a quantity of enabled second electronic devices is greater than or equal to a preset value; and
if the quantity of enabled second electronic devices is less than the preset value, installing, by the first electronic device, the virtual camera driver.

7. An electronic device, comprising a processor and a memory, wherein the memory stores instructions, and when the processor executes the instructions, the electronic device performs the method according to any one of claims 1-6.

8. A camera sharing system, comprising a first electronic device and a second electronic device, wherein the first electronic device is the electronic device according to claim 7, the second electronic device comprises a camera, and the first electronic device displays an image captured by the camera of the second electronic device.

9. A computer-readable storage medium, comprising instructions, wherein when the instructions are executed on an electronic device, the electronic device performs the method according to any one of claims 1-6.
